Europäisches Patentamt

European Patent Office

Office européen des brevets

(19)

(11) Publication number: **0 019 398**
A1

(12) # EUROPEAN PATENT APPLICATION

(21) Application number: 80301446.3

(22) Date of filing: 02.05.80

(51) Int. Cl.³: **G 01 H 1/00**

(30) Priority: 11.05.79 GB 7916380

(43) Date of publication of application:
26.11.80 Bulletin 80/24

(84) Designated Contracting States:
CH DE FR LI SE

(71) Applicant: SD SIGNAL PROCESSING LIMITED
18 Carlton Crescent
Southampton(GB)

(72) Inventor: Miles, Anthony Peter
Kilmaronaig 13 Woodland Close
Dibden Purlieu Southampton S04 5JG(GB)

(72) Inventor: Stewart, Ronald Macpherson
49 Glenwood Avenue
Southampton, S02 3PY(GB)

(74) Representative: Lupton, Frederick et al,
1 Western Road
Finchley London, N2 9BJ(GB)

(54) Monitoring apparatus for rotating machinery.

(57) Monitoring apparatus for determining the condition of rotating machinery comprises an automatic gain control circuit (4) and digitally controlled filter (6) for conditioning an incoming signal into a plurality of frequency bands. Each band is selectively coupled to a non-linear filter (10) comprising an amplifier with a predetermined slew rate providing a high pass output (12) comprising signals of an impulsive nature and a low pass output (14) comprising periodic and rotational components of the incoming signal. A comparative threshold is derived from the low pass output in a digitally controlled comparator (16) in order to quantify the impulsive signals. A counter correlator (18) determines the number of impulsive signals arising within a predetermined time period and the periodicity of the incoming signals.

EP 0 019 398 A1

./...

Croydon Printing Company Ltd.

*Fig.1*

MONITORING APPARATUS FOR ROTATING MACHINERY

Technical Field

This invention relates to monitoring apparatus for monitoring stochastic signals particularly though not exclusively for monitoring vibrations in rotating machinery for determining machinery condition.

Background Art

A wide variety of monitoring apparatus is available for monitoring rotating machinery for the determination of condition so as to avoid the necessity of periodic shutdown and inspection of the rotating parts. Commonly the monitoring apparatus monitors levels of vibration within the machinery, coupled with the monitoring of temperature, pressure, load and speed. Other monitoring apparatus collects magnetic chip debris or employs spectrographic oil analysis procedures, or particulate detection.

Rotating machinery which is monitored comprises motors (including IC Engines), gear boxes, pumps, compressors, turbines and generators. All such machinery has in common elements of one type or another for the transmission of energy including shafts, couplings and bearings; some machines may have a form of speed converter, for example, gearboxes. Such elements form a convenient site for monitoring since it is at such a site that damage will normally first occur, e.g., spalling in bearings or gear tooth fracture.

A major problem in the monitoring of vibration is that many other sources will contribute to the overall level of vibration, including vibrations arising from the normal and correct running of the machine, which will vary according to the speed and load of the machine, and vibrations from adjacent machinery. In addition, the detection of vibrations will be influenced by the vibration transmission characteristics of the surrounding casings (in the sense that certain frequencies are amplified and others attenuated) upon which casings it is necessary to position a vibration transducer.

The problem is particularly acute in offshore installations or other dynamically live structures such as ships or aircraft. Here vibration cross-coupling with adjacent machinery is increased, and other influences are present, such as structure borne vibration, wave pounding, drilling vibration and crane operation. Further it is often desirable to continue operating such machinery even in a damaged condition to ensure continuity of production and it is therefore important to monitor the condition of such equipment at frequent intervals to determine the extent of damage.

Computer based data analysers are available employing various techniques to analyse all available data for reliable determination of condition, but they require considerable skill on the part of the operator to interpret the results. Such analysers are also expensive and are not suited to a field environment since they are not rugged nor compact, or suitable for use in hazardous or flammable atmospheres.

Less expensive, more rugged and compact apparatus is available, which acts upon only part of the available data. However, particularly in dynamically live structures, such apparatus is often unable to segregate acceptable vibration from damage-related vibration. Moreover under such conditions to reduce false alarms, alarm thresholds must necessarily be raised, which results in a later warning of damage.

The usual type of vibration monitoring apparatus currently available monitors the root mean square value or the peak to peak value of overall vibration. This is specified in National Standards, notably BS 4675, VDI 2056, IFC 2372/ 2954 and API 670. However, such apparatus is sensitive to the aforesaid structural vibrations. More significantly such equipment has low sensitivity to signals arising within the normal time and frequency signature of the machine which can be directly related to known mechanisms of damage.

Another type of monitoring apparatus presently available responds to impulsive signals arising within the vibrations of the machinery, which impulsive signals can be shown to be directly related to damage, and is disclosed in US Patent Specification Number 3554012. This monitoring apparatus operates by detecting impulsive signals at high frequency, above 20 kHz, where such signals may predominate. The apparatus is coupled to an accelerometer mounted upon the rotating machinery, which accelerometer is excited by the impulsive signals, and responds by producing transient oscillations at the natural frequency of the accelerometer. Such transient oscillations as are produced, are detected by an electronic circuit and processed to provide an estimate of damage present in the machinery. This apparatus tends towards a late warning of damage, since the impulsive signals only exist with sufficient energy above 20 kHz, for detection when the damage is fairly widespread. This apparatus is also recognised to produce unreliable results at bearing rotational speeds of the order of 500 rpm or less, and is mainly confined to the detection of damage in rolling contact bearings.

One further type of apparatus for monitoring vibration in machinery is disclosed in British Patent Specification Number 1536306. Such apparatus calculates the Kurtosis coefficent, namely the fourth statistical moment in one or more frequency bands of the incoming electrical signal received from an accelerometer mounted upon the rotating machinery. The value of the Kurtosis coefficent is low when the machine is undamaged and rises with machinery damage. A disadvantage of such apparatus is that of ambiguous indications of damage, similar Kurtosis coefficents being determined for both undamaged and widespread damage states. Further more, apparatus is primarily configured for rolling contact bearings, and gives uncertain results when applied to gearing. Therefore the apparatus cannot be considered a general purpose damage detector.

## Disclosure of Invention

It is an object of the present invention to provide general purpose monitoring apparatus for monitoring vibrations in rotating machinery for determining machinery condition and to detect damage at an early stage before damage has become extensive.

The present invention provides monitoring apparatus, characterised by signal conditioning means (4,6) for providing an input signal comprising at least one frequency band, a filter circuit (10) connected to receive said input signal and including amplifier means (34) having a predetermined slew rate to provide a high pass output (12) comprising signals of an impulsive nature, and means (16) for comparing said high pass output with a threshold value for quantifying said impulsive signals.

Apparatus in accordance with the invention can detect impulsive signals over a broad frequency range (for rotating machinery a range of about 1 Hz - 50 kHz normally encompasses the greater part of machinery vibrations), and can thus provide an accurate determination of machinery condition.

Further since all impulsive signals can be detected, as distinct from the prior art arrangements described above (in which impulsive signals are not detected because of poor high frequency response, or only over a narrow high frequency band width, or are quantified using the fourth statistical moment which is known to give ambiguous results), apparatus in accordance with the invention is adapted to monitor a wide range of machinery, in particular gear boxes, where for example comparatively little impulsive information is generated by damage states. Thus apparatus in accordance with this invention is general purpose in nature.

Said signal conditioning means is operative to condition the signal for application to the filter circuit and may include automatic gain control means for providing an autoranging facility. In addition, filter means may be provided for dividing the incoming signal into a plurality of frequency bands. The frequency bands are individually analysed; this has the advantage of discriminating between different types of damage in that bearing damage is evident in high frequency signals whereas gearing damage arises at a lower frequency. This permits more meaningful analysis of the vibration signal and the detection of damage at an earlier stage than would otherwise be possible.

Since said amplifier means of the filter circuit has a predetermined slew rate (slew rate being the maximum rate of change of input signal to which the amplifier means will respond), the cut off frequency of the filter circuit will decrease as the amplitude of the input increases; this is explained in more detail below. Thus the filter circuit is non-linear in operation and the cut off frequency will decrease when an impulsive signal is present at the input of the filter circuit: thus the impulsive signals will be accentuated in the high pass output. As preferred a low pass output is provided representing periodic and rotational components of the machinery vibration. The low pass output may control automatic gain control means in the filter circuit to compensate for overall changes in the level of the input signal. The high pass output may be taken from an inverting input of the amplifier means; alternatively and as preferred this output signal is defined by subtracting the input signal with the output of the amplifier means in a minimum phase configuration.

Said comparing means operates to quantify impulsive signals, which are statistically related to machinery operating in a damaged condition. Said comparing means has an input containing all impulsive events detected, and a comparative threshold, which may be a fixed level representative of the bulk of the signal, or as preferred a varying level derived from the low pass output of the filter circuit and representing the instantaneous periodic and rotational components of the machinery vibration; thus the absolute values of the impulsive events may be quantified.

The comparing means will normally be preadjusted by attenuating the comparative threshold by a statistical method using a broad band random test signal, which is known to be representative of the signal obtained from undamaged rotating machinery.

The comparing means preferably includes an adjustable attenuation network through which the low pass output signal of the filter circuit is routed to derive the comparative threshold which is factory adjusted to a level at which non-damage impulsive signals are largely discounted.

Means are preferably provided to give a GO/NO GO indication of damage when more than a statistically defined number of impulsive signals are received within a predetermined time period. Such a GO/NO GO feature is of importance in permitting unskilled operators to use the equipment.

Brief Description of Drawings

A preferred embodiment of the invention will now be described with reference to the accompanying drawings, in which:

Figure 1 is a block diagram of monitoring apparatus according to the invention:

Figure 2 is a detailed block diagram of signal conditioning means of the monitoring apparatus:

Figure 3 is a circuit diagram of a filter circuit:

Figure 4 is a block diagram of a comparing means:

Figure 5 is a block diagram of a correlator unit.

## Best Mode for Carrying Out the Invention

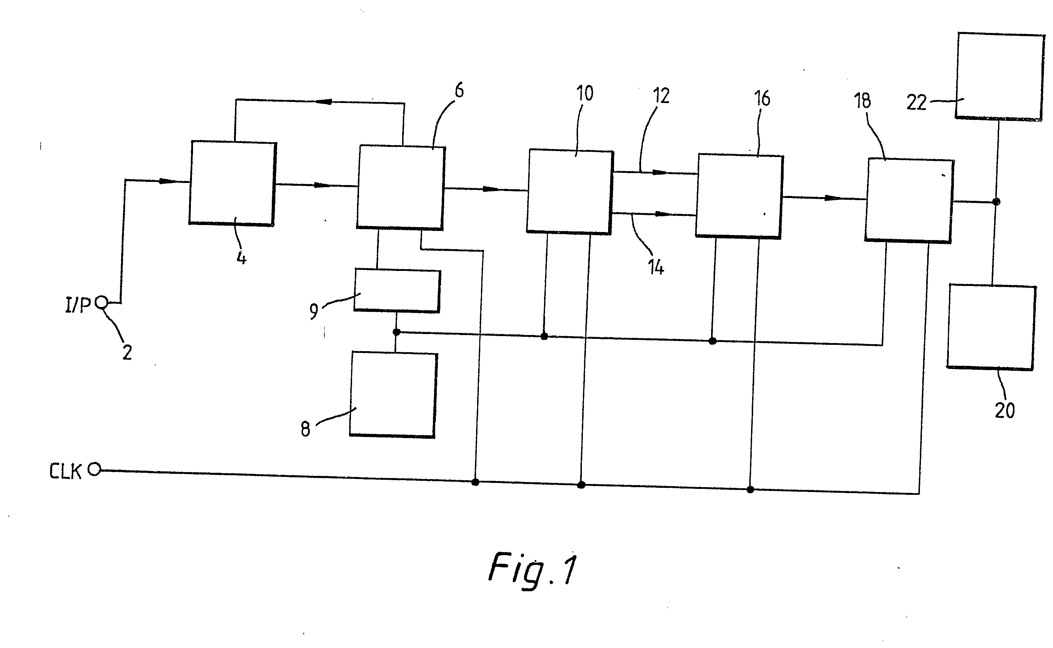

Referring to Figure 1 of the drawings, monitoring apparatus is connected at 2 to receive an input signal from a piezoelectric accelerometer of conventional construction mounted to monitor the vibration of rotating machinery. The transducer may incorporate an impedance converter for conditioning the signal from the transducer to allow for signal transmission over long cables with good interference rejection.

The input signal from the transducer is fed to an input means including automatic gain control circuit 4 which provides an autoranging facility. The amplitude of the input signal may vary between wide limits depending on load and speed variations of the rotating machinery and what other sources of vibration there may be in the vicinity of the rotating machinery, for example, other rotating machinery or, in the case of an offshore installation, wave pounding, drilling etc.

The normalised signal is fed from circuit 4 to a digitally controlled filter 6. Filter 6 divides the input signal into a plurality of frequency bands. The filter provides seven frequency bands by an automatic scanning technique. The filter may be a conventional filter or alternatively may comprise a digitally controlled charge coupled device or bucket brigade device. A digital control unit 8 is provided for controlling via an interface 9, the scanning of the filter 6 whereby each of the seven frequency segments is sequentially presented to a filter circuit 10.

Filter circuit 10 provides a high pass output on line 12, which comprises all impulsive events in the incoming signal. Filter circuit 10 provides a low pass output on line 14, which comprises periodic and rotational components of the incoming signal. The high-pass and low-pass outputs are applied to a comparator 16 where the low pass output serves to define a comparative threshold. The high pass output is compared with the comparative threshold in order to quantify the impulsive signals. The output of the comparator is applied to a counter and correlator unit 18, where impulsive events are counted over a predetermined sample period and analysed in a correlation means to determine the periodicity of the impulses. A display 20 is coupled to unit 18; a chart recorder may also be coupled to unit 18. An alarm logic circuit 22 is coupled to unit 18.

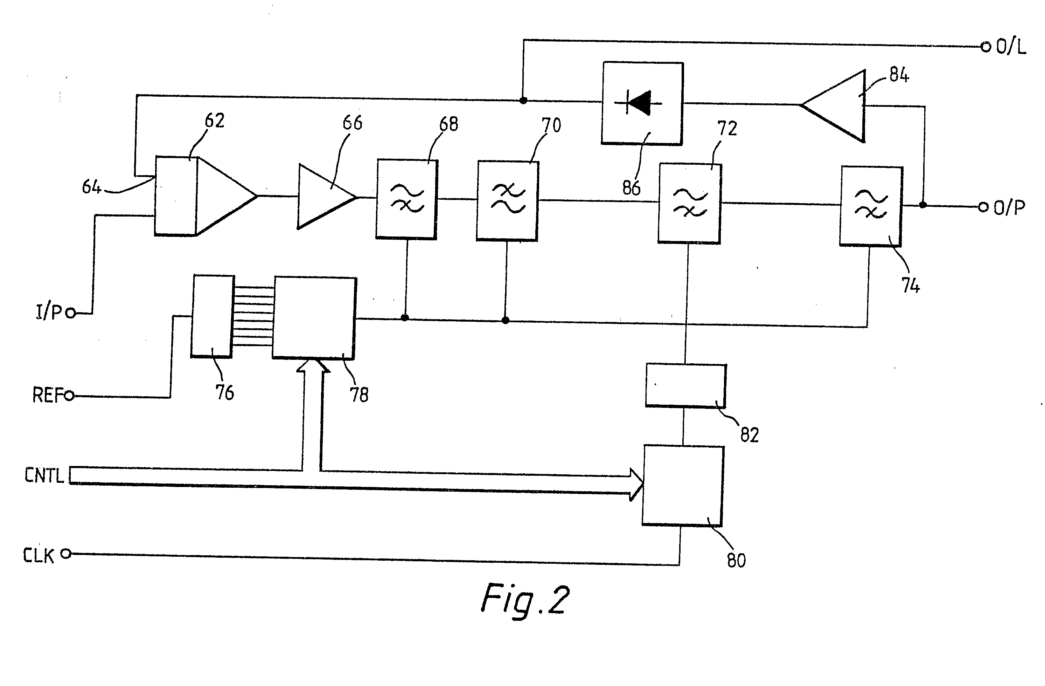

The signal conditioning elements of the invention are more clearly described in Figure 2. Incoming signals from the transducer are routed to an automatic gain control element (62). The output of the gain control circuit is a severely attenuated replica of the input vibration signal. The level of this output signal is held constant by a closed loop feedback arrangement which is connected to the control input (64) on the gain control circuit.

Normalised signals from the said gain control circuit are amplified by amplifying circuits (66) which condition the signal to a sufficient level for routing to the input filter section which divides the signal into a plurality of frequency bands.

The signal filter consists of four sections. Section one shown as (68) on the figure is a relatively straight forward single pole L.P. filter whose cut off frequency is voltage controlled. This section serves to protect against aliasing when a sampled filter means is provided for later sections which in the preferred embodiment is a charge coupled device. Filter section (70) is a similar voltage controlled filter having a H.P. 6 pole form factor which restricts the low frequency segment of the incoming signal. The third filter section (72) which as mentioned in the preferred embodiment is a charge coupled device is a very high slope L.P. filter with an exceptionally good finite impulse response and typical roll-off rate of greater than 150 dB per octave. This steep roll-off rate is useful in suppressing the effect of periodic signals near the passband edge, which would otherwise corrupt the correct operation of the said comparing means. The final section of the signal filter is a single pole L.P. element to restrict sampling frequencies from entering the signal output path (74).

The voltage control signals for the first second and fourth filter sections are derived from a stable reference provided elsewhere and divided by a precision resistor network (76). The output from the precision divider is selected by a digitally addressed multiplexer circuit (78) which includes 4 bit decoding logic.

The third filter section as preferred is controlled directly by clock transitions provided by the digital clock divider (80) which divides a 1 MHz clock provided elsewhere, to control sample periods. The clock divider is a 4 bit digitally addressable device of proprietary manufacture. The interface circuit (82) provides level shifting of the digital control word thus enabling varying device supply potentials to be accommodated.

The signal filter means is followed by a further amplifier (84) which feeds subsequent circuits. A precision rectifier connected to the output of said amplifier completes the control loop and feeds back amplitude information to the gain control circuit (62). Precision rectifier (86) also provides overload indication which is routed to alarm logic 22 in Figure 1. The precision rectifier is designed to operate on rapid changes in signal level of the incoming signal to avoid overloading, but not fast enough to be affected by impulsive events which are to be quantified as prescribed in the invention.

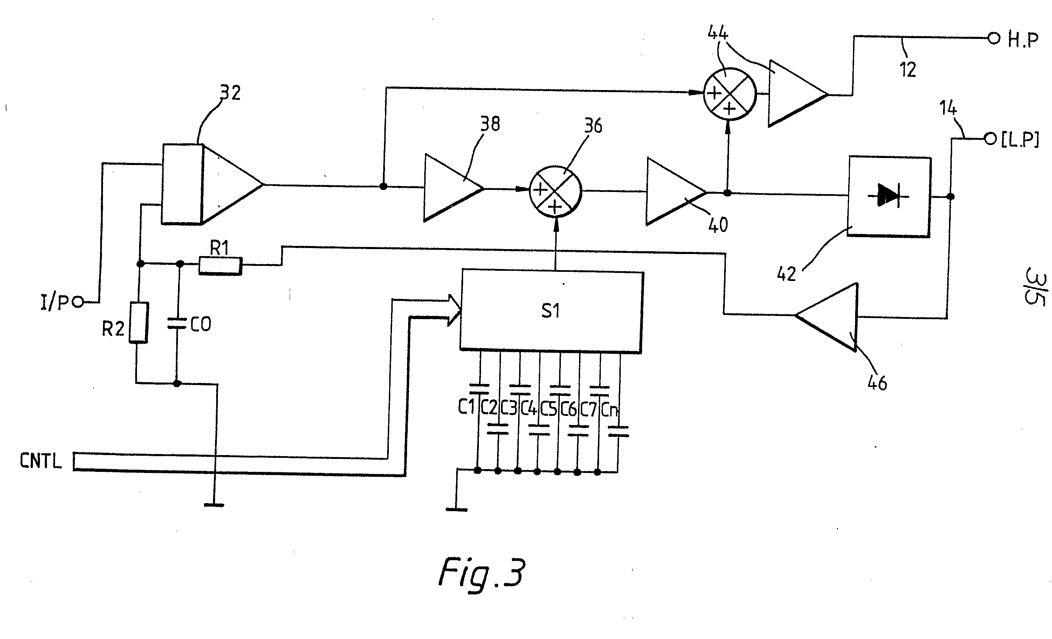

Filter circuit 10 is shown in more detail in Figure 3 and comprises an automatic gain control 32 coupled to the input of an operational amplifier having capacitors $C_1$-$C_n$ selectively coupled to its frequency compensation node 36 by a digital switch S1 in order to preselect the slew rate of the amplifier 38, followed by an invertor 40. The output of the amplifier which provides a low pass output is coupled to a precision rectifier 42. The low pass output of the circuit is applied with the previous input signal in a minimum phase configuration to a summing amplifier 44 the output of the summing amplifier providing a high pass output, comprising all impulsive signals separated from the periodic and rotational components of the input signal.

The output from the precision rectifier 42 is applied to an amplifier 46 averaged in a circuit $R_1CoR_2$ and applied as a control input to automatic gain control amplifier 32.

For the circuit $R_1CoR_2$, the time constants are as follows:-

$$\tau(\text{attack}) = R_1Co = 2.2 \text{ sec}$$
$$\tau(\text{decay}) = R_2Co = 22 \text{ secs}$$

The relatively small value of $\tau$attack allows the circuit to respond quickly to start up of machinery. The operation of the filter circuit is as follows.

Let the input to filter circuit 10 $= Ax(t)$ $\qquad$ (1)

Where A is a gain factor introduced by AGC 4 and $x(t)$ is a time dependent input signal representative of vibration in the machine.

Let the low pass output of filter 10 $= y$

Then the output from precision rectifier 42 $= |y|$

Thus the output of AGC 32 $= \dfrac{ABx(t)}{|y|}$

Where $\dfrac{B}{|y|}$ is a gain factor introduced by AGC 32

Therefore $y = \dfrac{-ABGx(t)}{|y|}$

Where G is again factor introduced by the slew rate amplifier.

Now the slew rate of amplifier, namely the maximum rate of change of an input signal to which the amplifier will respond, is determined by the capacitor network $C_1-C_n$ coupled to the compensation node 36 of the amplifier.

Let $C_x$ be the value of the capacitor selected from the network $C_1-C_n$, and let the current flowing from the compensation node be I.

Then $\qquad I = C_x \dfrac{dV}{dt}$

but $\qquad \dfrac{dV}{dt} = \text{slew rate of amplifier}$

For the circuit shown $\qquad I(\text{max}) = 200\mu A$

Therefore $\qquad \dfrac{dV(\text{max})}{dt} = \dfrac{I(\text{max})}{C_x}$

It is common knowledge that for a slew rate limited amplifier, the cut off frequency is defined as

$$\omega = \frac{SR}{E_O}$$

Where $E_O$ is the peak value of the output signal.

In this case $E_O = y$

Hence the instantaneous cut off frequency

$$\omega(t) = \frac{I(max)}{C_x} \frac{|y|}{-ABGx(t)} \quad rad/sec$$

Thus it may be seen that when an impulsive signal is present at the input, $x(t)$ increases and $\omega(t)$ decreases.

Therefore the high pass output signal of the filter is given by the expression

$$\frac{ABx(t)}{|y|} + \frac{I(max)}{w(t)C_x}$$

Thus the high pass output signal of the filter contains all signals with slew rate greater than SR, the result being the filter circuit operates in a non-linear manner so that the high pass output comprises signals of an impulsive nature separated from the remainder of the input signal. The high pass output comprises all impulsive signals relating to the machinery and also includes components of vibrations normally present in the machinery and including those directly attributable to damage.

Digital control unit 8 controls switch S1 in order to optimise the operation of the filter for each frequency segment applied to the filter. Thus the capacitors $C_1-C_n$ will be selectively enabled dependent upon the frequency band being processed.

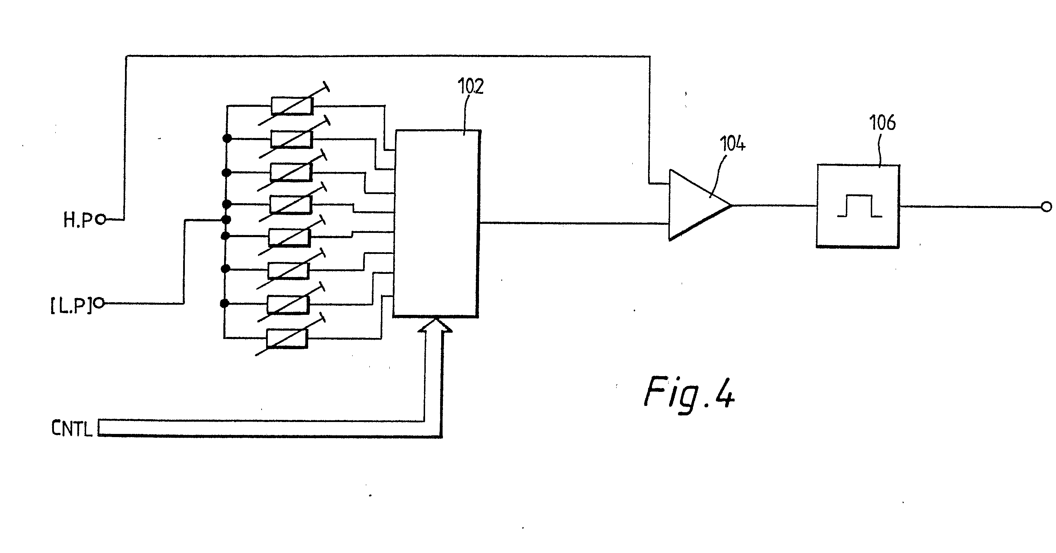

In order to quantify those pulses in the high pass output of the filter, both the high pass and low pass outputs of the filter are applied to a digitally controlled comparing means or comparator 16. Comparator 16 is shown schematically in Figure 4. The low pass output $|y|$ from filter 10, precision rectified and averaged, is applied to a digitally controlled attenuation network 102. The output of the filter 10 is precision rectified and applied to the other input of the high speed precision comparator 104.

In normal operation of the rotating machinery with no damage in the machinery, there will inevitably be generated

- 11 -

0019398

a certain number of impulsive signals which will appear in the high pass output filter 10. Attenuation network 102 is pre-adjusted so that the number of impulsive events appearing at the output of comparator 104 is a predetermined number. Thus at the onset of damage within the machinery, the number of impulsive signals having an amplitude above a defined threshold value set by network 102 will increase by a predetermined amount within a given time period, a suitable indication may be provided. The output from amplifier 104 is applied through a pulse shaping monostable 106 to a counting circuit where an indication signal is initiated when the number of signals occurring within a predetermined time period increases above the alarm set value.

Attenuation network 102 is controlled by digital control unit 8 via switch S2 so that the threshold value is varied according to the frequency band being monitored. This optimises the operation of comparator 16. The digital control of the three units comprising filter 6, filter circuit 10 and comparator 16, provides a highly accurate means of monitoring signals with impulsive quality within the rotating machinery. The progression of damage within the machinery and the extent of damage within the machinery may be assessed by comparing the relative levels of damage related impulsive signals created within each frequency band.

As a further means of isolating only those signals occurring as a result of damage, a correlator is provided within counter 38 providing a simple correlation function to weight signals coming from the filter circuit 10, which are likely to relate to damage within the machinery.

Such correlation is required in order that damage related events generated deep within the machinery, for example, from a gear, may be extracted without interference from signals generated closer to the transducer. The object of correlation is to improve the detection capability of said detecting means toward weak signal levels associated with a distant source. The correlator may also be employed to inhibit known or unwanted signals of an impulsive quality, not directly associated with the primary detection function. Further, the periodicity of the impulsive signals forms an element of the correlation process, and hence may be extracted.

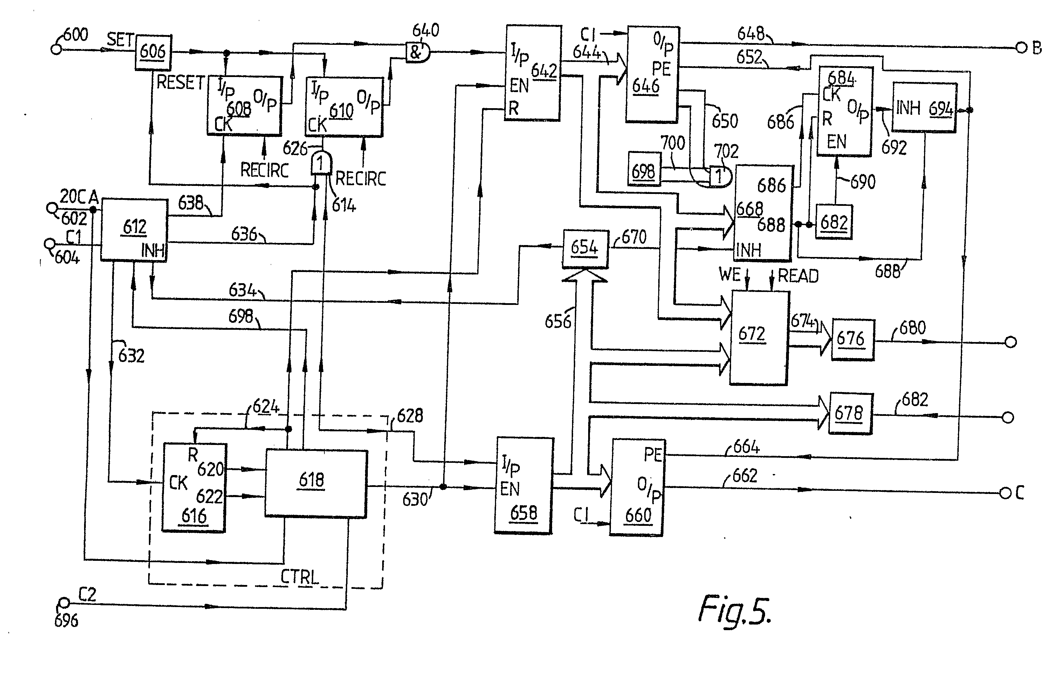

The autocorrelator is shown in more detail in Figure 5. An input terminal 600 is provided for damage related pulses from monostable 36 of Figure 4 each pulse occupying one "bin length" time period. Such bin lengths are determined by clock pulses 20CA provided at terminal 602, the length altering for the rotational speed of the machine being monitored (the frequency varies between 39 Hz and 3.9 kHz). For a nominal frequency of 1 kHz, the bin length is one millisecond. Two further clock signals, C1 and C2, at frequencies of 1 MHz and 10 kHz respectively are provided for at terminals 604 and 696 respectively. Input terminal 600 is coupled to a latch 606, whose output is coupled to a shift register 608, having 256 bit capacity and also to a shift register 610 having 512 bit capacity. Clock terminals 602 and 604 are also connected to registers 608, 610 via clock enabling circuit 612 and gate 614. Enabling circuit 612 and gate 614 are controlled by a control circuit CTRL comprising a counter 616 which is coupled to a chain of interconnected J-K flip flops and gates 618 via 256 count output 620 and 512 count output 622. The J-K flip flops (not shown in detail) provide enabling signals for the correct time sequenced operation of all the elements of the correlator. Clock terminals 602 and 696 are also connected directly to flip flops and gates 618. Flip flops 618 provide a reset signal to counters 616 and 642 via lines 624, and a clock pulse to lag counter 658 and to shift register 610 via OR gate 614 on lines 628.

Lag counter 658 has an 8 line bus 656 coupled to a lag register 660, an inhibit decoder 654, a read/write memory 672 and a digital to analogue convertor 678. Lag register 660 has an output port C.

Outputs of registers 608, 610 are connected via AND gate 640 to the clock input of a coefficient counter 642. Coefficient counter 642 has an 8 line output bus 644 which is coupled to a coefficient register 646, a read/write memory 672 and to a magnitude comparator 668. Coefficient register 646 has an output bus 650 which is connected to magnitude comparator 668 via OR gate 702. An array of manual switches 698 is also connected via bus 700 and OR gate 702 to magnitude comparator 668. Register 646 also has an output port B.

Output terminal 686 (A>B) of comparator 668 is coupled to the "set" input of a latch 682, to the reset input of a divide by three counter 684 and to preset enable gating circuit 694. Output terminal 686 (A<B) of comparator 668 is coupled to the clock input of counter 684. The output of counter 684 is coupled via line 692 to the inhibit input of gating circuit 694. The output of gating circuit 694 is coupled to the "preset enable" inputs of lag register 660 and coefficient register 646. The outputs of inhibit decoder 654 is connected via line 670 to the inhibit input of comparator 668, and a second output from decoder 654 is connected via line 634 to the inhibit input of clock enabling circuit 612. The output of read/write memory 672 is coupled via data bus 674 to a digital to analogue converter 676.

Operation of the correlator is divided into two parts, an acquisition mode and a calculation mode. In the acquisition mode 20CA pulses are passed by circuit 612 under the control of CTRL to registers 608, 610 and counter 616. Damage related pulses are used to set latch 606 and the data present at its output is stored by registers 608,610. Latch 606 is reset by the clock pulses after the data has been stored by registers 608, 610. After 256 bin lengths, the output of enabling circuit 612 on line 638 is inhibited to prevent further clocking of register 608. After 512 bin lengths the output of circuit 612 on line 636 is inhibited to prevent further clocking of register 610. At this point 20CA pulses are inhibited and C1 pulses are enabled, so that those pulses can now clock registers 608, 610. Registers 608, 610 are now put into the recirculate mode so that further data entry is inhibited. This is the beginning of the calculation cycle.

In the calculation mode, the data in registers 608, 610 is shifted by one position on each C1 clock pulse, compared for conincidence by AND gate 640 and used to increment counter 642. Lag counter 658 and coefficient counter 642 are now enabled by CTRL on lines 630. For shift register locations of 0,1,2,254, 255 and 256 bin lengths, correlation between the data in each register will be very high and not meaningful, and for such shifts, decoder 654 will be active on line 670 to inhibit comparator 668. After 256 bin lengths the output of circuit 612 on line 638 is inhibited to prevent further clocking of register 608 and after 512 bin lengths the output of circuit 612 on line 636 is inhibited to prevent further clocking of register 610. At this point on the next 20CA clock pulse lines 628 from CTRL become active and cause register 610 to be shifted one bin length relative to register 608, and also cause lag counter 658 to increment by one. Lines 624 from CTRL also become active, causing counters 616 and 642 to be reset.

Assuming the data in register 610 to be shifted by more than two bin lengths relative to that in register 608 (i.e. that decoder 654 is not active) thus after 256 clock pulses the value of the outputs of counter 642 on bus 644 are compared with the outputs of register 646 on setting switches 698 by comparator 668. If A>B, an output 668 is activated and used to set latch 682, and to provide a preset enable signal via circuit 694 to registers 646 and 660. The output of latch 682 on line 690 is used to enable counter 684, which is reset at the same time by line 688. The preset enable signal to registers 646 and 660 causes the data present on buses 644 and 656 to be entered and stored. At the same time, data on bus 644 is written into memory 672 in the location determined by the address present on bus 656. After 512 pulses, counters 616 and 642 are reset as previously described and register 610 is shifted by one bin length.

After the next cycle of 256 clock pulses 'A' data on bus 644 is again compared with 'B' data on bus 650. If A>B, the same action occurs as with the previous cycle, except that latch 682, having been previously set by the first A>B signal, remains unaffected.

If however, A<B, then the A<B output 686 becomes active and causes counter 684 to increment by one. If this happens in three consecutive cycles, the output of counter 684 becomes active and prevents further "preset enable" signals from reaching registers 646, 660 for the remainder of the calculation cycle.

A complete calculation cycle consists of 256 bursts of 512 clock pulses register 610 being shifted by one bin length at the end of each burst. Data on bus 644 is written into the memory 672 in each address location determined by bus 656 at the end of each burst.

After a complete calculation cycle inhibit decoder 654 becomes active on line 634 preventing further C1 clock pulses from reaching counters 616, 642 and 658. C1 clock pulses are now applied to registers 646 and 660, causing the values stored therein to be clocked out in serial manner for further processing. These values represent the first maximum for the correlation coefficient, together with its periodicity, or lag.

After a complete calculation cycle, memory 672 may be put into the "read" mode, either automatically or manually. The clock C2 at terminal 696 is now enabled and used to increment counter 658 directly, or divided by 512 and used to increment counter 658. Data stored in memory 672 is now output on to bus 674 and into D-A converter 676. The address location for any particular data is determined by bus 656, which is connected to D-A converter 678. Thus, the analogue outputs from the two D-A converters on lines 680 and 682 comprise the complete calculation cycle, and may be used to drive an oscilloscope directly, or a chart recorder or printer if C2 is divided by 512 first.

It will be appreciated there has been disclosed monitoring apparatus for reliably detecting impulsive signals against a background of a high level of noise. Such equipment may find application in fields other than condition monitoring, e.g. the electromedical field in measuring foetal heartbeats, or in the fields of radar or aerospace or in the field of intruder detection.

- 16 -

0019398

WHAT IS CLAIMED IS:

1. Monitoring apparatus, characterised by signal conditioning means (4,6) for providing an input signal comprising at least one frequency band, a filter circuit (10) connected to receive said input signal and including amplifier means (34) having a predetermined slew rate to provide a high pass output (12) comprising signals of an impulsive nature, and means (16) for comparing said high pass output with a threshold value for quantifying said impulsive signals.

2. Apparatus according to claim 1, characterised in that said amplifier means (34) provides a low pass output (14) comprising signals of a non-impulsive nature, and in that said comparing means includes means (102) for deriving a threshold value from said low pass filter output.

3. Apparatus according to claim 2, characterised in that said threshold deriving means comprises adjustable attenuation means (102).

4. Apparatus according to claim 1, characterised in that said amplifier means (34) includes a capacitance ($C_1$-$C_n$) of predetermined value for determining said slew rate.

5. Apparatus according to claim 2, characterised in that said filter circuit includes comparison means (44) for comparing said input signal with said low pass output signal to derive said high pass output signal.

6. Apparatus according to claim 2, characterised in that said filter circuit includes means (42) for rectifying said low pass output signal, and automatic gain control means (32) for controlling the amplitude of the input signal to said amplifier means in dependence on said rectified low pass signal.

7. Apparatus according to claim 1, characterised in that said signal conditioning means includes gain control means (4).

8. Apparatus according to claim 1, characterised in that said signal conditioning means includes filter means (6) for dividing the input signal into a plurality of frequency bands and means for selectively coupling each frequency band to said filter circuit.

9.    Apparatus according to claim 8, characterised by means (8,9,S1) for selecting the slew rate of said amplifier means in accordance with the frequency band coupled to said filter circuit.

10.    Apparatus according to claim 8, characterised by means (8,9,S2) for selecting the threshold value of said comparing means in accordance with the frequency band coupled to said filter circuit.

11.    Apparatus according to claim 1, characterised by counter means (18) for counting said impulsive signals for a predetermined time period.

12.    Apparatus according to claim 1, characterised by correlator means including first and second registers (608, 610) for storing first and second samples of predetermined duration of said high pass output, means (614, 618) for shifting the contents of one register relative to the other by a variable amount, and means (640, 642) for comparing the contents of said registers to determine the correlation between said samples as a function of the relative shift between the registers.

13.    Apparatus according to claim 12, characterised in that said comparing means includes a coefficient counter (642) for counting coincidences between values of sample elements in the registers for each relative shifting of the registers, and a coefficient register (646) for storing a maximum value of the coefficient counter.

14.    Apparatus according to claim 13, characterised by a read/write memory (672) for storing the value of said coefficient counter for each relative shift of said registers.

Fig.1

0019398

Fig.2

2/5

0019398

Fig.3

0019398

Fig.4

Fig.5.

5/5

0019398

European Patent
Office

**EUROPEAN SEARCH REPORT**

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| | <u>US - A - 3 677 072</u> (B. WEICHBRODT et al.) <br><br> * Column 1, lines 60-75; column 2, line 52 - column 3, line 12; figure 2 * <br><br>-- <br><br> <u>US - A - 3 705 516</u> (J.J. REIS) <br><br> * Abstract; figure 1 * <br><br>-- | 1,2,5 <br><br><br><br><br><br><br> 8 | G 01 H 1/00 |
| A | POWER, vol. 117, nr. 3, March 1973 <br> NEW YORK (US) <br> J.S. MITCHELL et al.: "Widened frequency range is improving today's machinery vibration ana-lysis", pages 51-53 <br><br> * Page 51, column 1, line 1 - column 2, line 4; page 52, column 1, lines 4-28 * <br><br>---- | | TECHNICAL FIELDS SEARCHED (Int.Cl. ³) <br><br> G 01 H 1/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| The present search report has been drawn up for all claims | | |
|---|---|---|
| Place of search <br> **The Hague** | Date of completion of the search <br> **18.08.1980** | Examiner <br> **HAASBROEK** |